# FASCICULE DE BREVET EUROPEEN

(11) **EP 0 885 133 B1**
(45) Date de publication et mention de la délivrance du brevet: **11.09.2002**
(21) Numéro de dépôt: 97905117.4
(22) Date de dépôt: 28.02.1997
(51) Int. Cl.: B60C 9/08

(54) **PNEU RADIAL COMPORTANT UNE NAPPE CARCASSE DONT LA SOUDURE PAR RECOUVREMENT EST POURVUE DE DECOUPES**
RADIALER REIFEN MIT EINER KARKASSE, DEREN ÜBERLAPPUNGSSPLEISSEN MIT EINSCHNITTEN VERSEHEN IST
RADIAL TYRE COMPRISING A CARCASS PLY WITH A NOTCHED LAP WELD

(30) Priorité: 05.03.1996 FR 9602866
(43) Date de publication de la demande: 23.12.1998
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: CHANDEZON, Pierre, F-63100 Clermont-Ferrand (FR); BILLIERES, Jean, F-63100 Clermont-Ferrand (FR)
(74) Mandataire: Hiebel, Robert
(86) Numéro de dépôt international: EP9700971
(87) Numéro de publication internationale: WO97032740

(56) Documents cités:
- EP-A- 0 117 137
- EP-A- 0 120 623
- EP-A- 0 707 984
- PATENT ABSTRACTS OF JAPAN vol. 010, no. 257 (M-513), 3 Septembre 1986 & JP 61 083025 A (TOYO TIRE & RUBBER CO LTD), 26 Avril 1986, cité dans la demande

## Description

La présente invention se rapporte aux pneumatiques radiaux et aux armatures destinées à renforcer la carcasse de tels pneumatiques.

Il est connu que de telles armatures de carcasse sont constituées d'au moins une nappe, ci-après dénommée nappe radiale ou nappe carcasse radiale, préparée sous la forme d'un produit semi-fini et qui consiste essentiellement en une matrice élastomérique renforcée par des fils. Ces fils de renforcement, désignés ci-après fils radiaux, sont disposés à intervalle régulier, et parallèlement les uns aux autres, dans une direction sensiblement radiale, c'est-à-dire une direction faisant un angle d'environ 90 ± 10° avec la tangente à la direction circonférentielle du pneumatique.

Chaque nappe radiale se présente normalement sous la forme d'un élément annulaire continu qui est formé, lors de la confection de l'armature de carcasse sur un tambour, par découpage de lés ou bandes de tissu caoutchouté, puis par assemblage des deux bords de tissu ainsi découpé sur le tambour, au moyen d'un joint, encore appelé soudure, permettant de relier ces deux bords. Ces lés de tissu sont normalement découpés entre deux fils radiaux, et parallèlement à ces derniers pour éviter de les couper.

Deux types de joint ou soudure sont couramment employés : la soudure dite bout à bout, obtenue par aboutage des deux bords, sans superposition, et la soudure dite par recouvrement, c'est-à-dire par superposition, chevauchement des deux bords. Dans le cas des enveloppes de pneumatique radial pour véhicule de tourisme dont la carcasse est renforcée par des fils non métalliques, notamment par des fils textiles, on utilise habituellement une soudure par recouvrement.

La présente invention concerne précisément une amélioration apportée aux soudures par recouvrement des nappes radiales constituant les armatures de carcasse des pneumatiques radiaux.

Comme son nom l'indique, la technique de soudure par recouvrement consiste à recouvrir un bord du tissu découpé par son autre bord, suivant une certaine distance, et à assurer la liaison par application d'une pression. Après cuisson de l'enveloppe, ce type de soudure présente une grande solidité, due à la surface d'adhésion importante qui peut s'exercer entre les parties de recouvrement.

Cependant, cette soudure par recouvrement présente des inconvénients. En raison d'une double épaisseur de tissu, la densité de fils radiaux est en effet multipliée par deux dans la zone de recouvrement. Par densité de fils, on entend de manière connue le nombre de fils par unité de longueur de nappe, dans une direction normale à l'axe de ces fils. La présence de cette double couche de fils a notamment pour conséquence que, sous l'effet de la pression de gonflage du pneumatique, et donc de la mise sous tension de la nappe carcasse radiale, chaque fil radial présent dans la soudure va subir une tension et un allongement environ deux fois moindre, comparativement à un fil radial situé en dehors de la soudure. En outre, et de manière connue, les fils radiaux, s'ils sont thermorétractiles, présenteront lors de la cuisson du pneumatique une contraction différente selon qu'ils seront à l'intérieur ou à l'extérieur de la soudure.

Il résulte des phénomènes ci-dessus une discontinuité des propriétés de la nappe carcasse au niveau de la soudure, notamment de rigidité, et par suite un manque d'uniformité du pneumatique fabriqué. Cette discontinuité et ce manque d'uniformité, très localisés, peuvent être particulièrement nuisibles à l'apparence, à l'aspect extérieur du pneumatique puisqu'ils vont se traduire dans le cas général par la formation d'un creux, plus ou moins prononcé, dans les flancs du pneumatique gonflé. On sait que cette dépression ou déformation du flanc, encore décrite sous le terme d'indentation, est généralement d'autant plus marquée que le module en extension du fil de renforcement est plus faible.

Le défaut d'aspect ci-dessus, bien connu et particulièrement visible lorsqu'on utilise notamment des fils en polyester présentant un faible module en extension, est parfois préjudiciable à la bonne commercialisation du pneumatique : si ce défaut est jugé trop prononcé, il empêchera même toute commercialisation du pneu fabriqué, avec pour conséquence une destruction de ce dernier, destruction d'autant plus regrettable, du point de vue fonctionnel, que n'est associé à ce défaut d'aspect aucune diminution de la sécurité. En outre, il est connu que cette non-uniformité des flancs peut nuire à la régularité du roulage du pneumatique.

De très nombreuses solutions ont été proposées jusqu'ici pour tenter de pallier les inconvénients précédents.

Pour la grande majorité d'entre elles, ces solutions consistent à modifier les caractéristiques des fils de renforcement radiaux, ou leur agencement, dans la partie de recouvrement considérée. De telles solutions présentent l'inconvénient majeur de nécessiter, soit la préparation de tissus calandrés hybrides, c'est-à-dire non homogènes (utilisation de fils radiaux de nature, de propriétés différentes, emploi de densités de fils différentes dans la zone de soudure), en amont des opérations de confection du pneumatique elles-mêmes, soit des étapes supplémentaires coûteuses pendant cette confection (enlèvement des fils en double, réduction de l'épaisseur de la soudure par des techniques d'écrasement ou d'uniformisation de la zone de recouvrement, ajout d'autres bandes de tissu ou de gomme, pour ne citer que quelques exemples connus).

D'autres solutions ont été proposées, moins nombreuses, qui consistent à couper sélectivement certains des fils radiaux "en double", dans l'un ou l'autre bord de recouvrement de la soudure. Ainsi, seuls les fils d'un des deux bords "participent" à la mise sous tension de la nappe carcasse. Ces découpes consistent généralement en des incisions étroites (sans enlèvement de matière) ou bien en de larges encoches (avec enlèvement de matière - technique dite de "notching") pratiquées sur les tissus de confection, et sont généralement localisées en un point quelconque du flanc du pneumatique jusque dans la partie interne du bourrelet (zone de bourrelet située à l'intérieur de l'enveloppe), voire même jusque sous la tringle (voir par exemple les brevets US-A-4 466 473 ou EP-B-0 117 137, et les demandes de brevet publiées sous les Nos JP1986/83025, JP1986/94745, JP1986/218402).

En particulier, le brevet US-A-4 466 473 ou le brevet équivalent EP-B-0 117 137 décrivent un procédé de fabrication d'armature de carcasse radiale qui consiste à pratiquer, dans l'un seulement des deux bords de recouvrement, tout le long de ce bord et à intervalles réguliers, une pluralité de découpes perpendiculaires à la direction des fils radiaux, de profondeur sensiblement égale à la largeur de recouvrement, ce bord étant ensuite recouvert par l'autre bord pour former la soudure par recouvrement. En coupant ainsi les fils radiaux d'un bord de recouvrement, les tensions s'annulent sur les fils de ce bord, alors qu'elles doublent sur les fils de l'autre bord ; les fils du bord non coupé supportant alors une charge sensiblement identique à celle des fils situés à l'extérieur de la soudure, les écarts de tension entre l'intérieur et l'extérieur de la soudure sont supprimés, la déformation en creux sensiblement réduite, et l'uniformité du flanc améliorée. Le préambule de la revendication 1 a été délimité par rapport à ce document.

Les méthodes ci-dessus de découpes sélectives des fils radiaux, pratiquées sur un seul des deux bords de recouvrement de la soudure, que ce soit dans le flanc ou dans la partie interne du bourrelet, sont particulièrement délicates à mettre en oeuvre : d'une part la découpe doit être suffisamment profonde pour que tous les fils en double soient coupés, mais il est impératif d'autre part, pour des raisons de sécurité, qu'aucun des fils extérieurs à la soudure ne soit coupé dans ce flanc ou cette partie interne du bourrelet, afin que la continuité radiale de l'armature de carcasse, à l'extérieur de la soudure, y soit entièrement préservée. De telles conditions nécessitent des interventions ou des reprises manuelles fréquentes de la part d'un opérateur, sur le tambour de confection, et ces méthodes s'avèrent finalement incompatibles avec l'utilisation de machines de confection automatiques, fonctionnant à cadence élevée, et ne pouvant garantir la précision indispensable à la réalisation de telles découpes et soudures. Ces inconvénients, bien connus, ont été mentionnés par exemple dans les brevets ou demandes de brevet EP-A-0 239 160 ou US-A-4 810 317, EP-A-0 407 134 ou US-A-5 437 751.

En définitive, les très nombreuses solutions proposées jusqu'ici s'avèrent coûteuses ou difficiles à mettre en oeuvre industriellement, et aucune d'entre elles ne s'est révélée complètement satisfaisante, notamment du point de vue de la productivité, pour supprimer ou même atténuer le problème de déformation flanc des pneumatiques radiaux, renforcés en particulier par des fils en polyester.

Ainsi, il existe toujours une demande, d'ailleurs croissante, pour améliorer l'aspect des flancs des pneumatiques radiaux.

Un but de la présente invention est de proposer un pneumatique nettement amélioré en ce qui concerne l'apparence et l'uniformité de ses flancs, ceci sans préjudice pour ses autres performances.

Un autre but de l'invention est d'offrir un tel pneumatique sans difficultés ni surcoût de fabrication, ce dernier pouvant être confectionné sur des machines automatiques fonctionnant à cadence élevée, sans nécessiter d'interventions manuelles, et donc sans diminuer la productivité.

Le pneumatique radial de l'invention ayant au moins une armature de sommet et une armature de carcasse constituée d'au moins une nappe de tissu caoutchouté comprenant des fils radiaux, sensiblement parallèles à la direction radiale, ladite nappe radiale comportant au moins une soudure par recouvrement formée par le chevauchement de deux bords dudit tissu et limitée circonférentiellement par deux lisières, est caractérisé en ce que ladite soudure comporte, en chacun de ces deux bords, au moins une découpe localisée sous l'armature de sommet, sectionnant une pluralité de fils radiaux.

En d'autres termes, le pneumatique de l'invention possède une armature de carcasse formée par au moins un élément annulaire continu (nappe radiale) soudé par le recouvrement de deux extrémités de tissu caoutchouté, et la soudure par recouvrement ainsi obtenue, de faible dimension dans la direction circonférentielle, est entaillée, avec les fils radiaux qu'elle contient, par au moins une coupure transversale dans chaque bord de recouvrement de la soudure, cette coupure étant située sous le sommet du pneumatique.

De préférence, la découpe ci-dessus a une profondeur supérieure à la demi-largeur de la soudure par recouvrement, ces deux dimensions étant mesurées dans la direction circonférentielle.

Plus préférentiellement, la découpe est une découpe dite "entière", dont la profondeur est supérieure à la largeur totale de la soudure, ladite soudure étant ainsi traversée entièrement, d'une lisière à l'autre, par cette découpe entière.

L'invention concerne plus particulièrement un pneumatique dont l'armature de carcasse comporte une seule nappe radiale.

Cette invention sera aisément comprise à l'aide de la description et des exemples qui suivent, ainsi que des figures toutes schématiques relatives à ces exemples.

Sur le dessin :

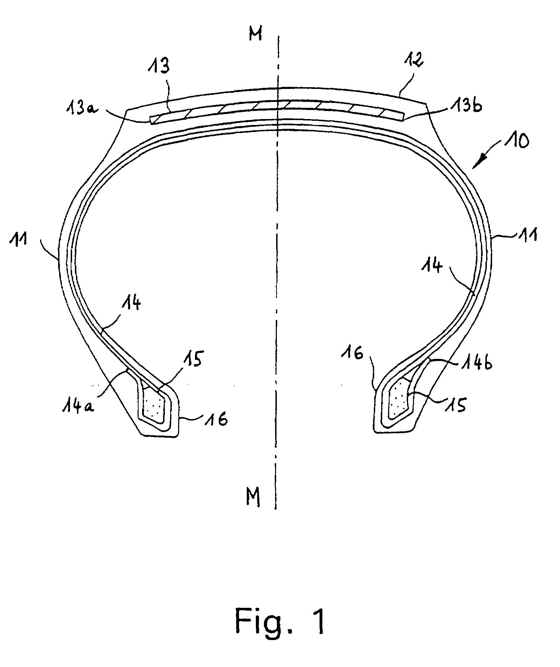

- la figure 1 représente une coupe radiale d'une enveloppe de pneumatique à armature de carcasse radiale;

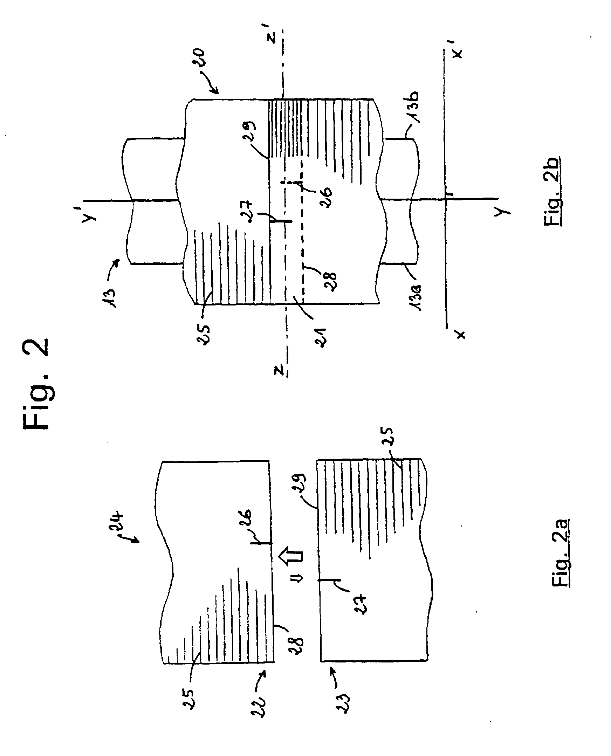

- la figure 2 représente, pour une enveloppe de pneumatique conforme à l'invention, une portion de nappe carcasse radiale avec une soudure par recouvrement pourvue d'une découpe dans chaque bord de recouvrement (Fig. 2b), ainsi que les deux bords d'un même lé de tissu (Fig. 2a) destinés à être superposés pour obtenir cette soudure par recouvrement;

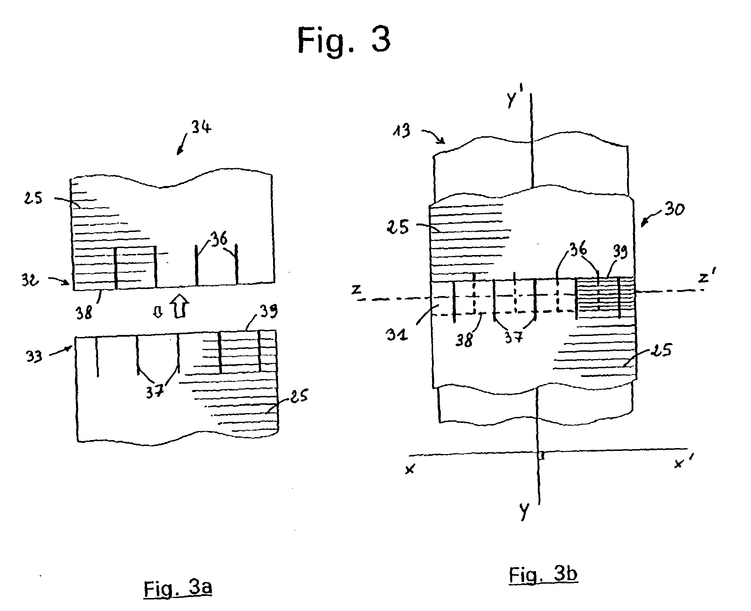

- la figure 3 représente, pour une autre variante d'enveloppe de pneumatique conforme à l'invention, une portion de nappe carcasse radiale ayant une soudure par recouvrement comportant une pluralité de découpes dans chaque bord de recouvrement (Fig. 3b), ainsi que les deux bords d'un même lé de tissu (Fig. 3a) destinés à être superposés pour obtenir cette soudure par recouvrement.

La figure 1 représente, de manière schématique et très générale, une coupe radiale d'une enveloppe de pneumatique à armature de carcasse radiale, cette enveloppe pouvant être conforme ou non conforme à l'invention, dans cette représentation générale. Cette enveloppe 10 comporte deux flancs 11 réunis par une bande de roulement 12, une armature de sommet 13 s'étendant d'un bord 13a à l'autre bord 13b, une armature de carcasse 14 ancrée à deux tringles 15 dans chaque bourrelet 16 jusqu'aux deux extrémités latérales 14a et 14b de cette armature 14.

L'armature de carcasse 14 est constituée d'au moins une nappe radiale contenant des fils de renforcement radiaux qui sont disposés pratiquement parallèles les uns aux autres et qui s'étendent d'un bourrelet à l'autre dans une direction sensiblement radiale, de manière à former un angle compris entre 80° et 90° avec le plan circonférentiel médian M-M. Par "plan circonférentiel médian", on entend de manière connue le plan perpendiculaire à l'axe de rotation du pneumatique qui est situé à mi-distance des deux bourrelets 15 et qui passe donc par le milieu de l'armature de sommet 13.

La figure 2 représente, vue de dessous, pour une enveloppe de pneumatique 10 conforme à l'invention, une portion de nappe carcasse radiale 20 comportant une soudure par recouvrement 21 (fig. 2b), ainsi que les deux bords ou extrémités 22 et 23 d'un même lé de tissu caoutchouté 24 (fig. 2a), ces deux bords étant destinés à être superposés, à se chevaucher, pour former la soudure 21. La portion de nappe 20 constitue une partie de l'armature de carcasse 14 dont la partie centrale est située sous l'armature de sommet 13 du pneumatique 10 conforme à l'invention, ladite armature 13 étant délimitée latéralement, sur la figure 2b, par ses deux extrémités 13a et 13b.

Pour faciliter la description et la compréhension de l'invention, cette portion de nappe 20 et sa soudure par recouvrement 21 sont représentées de manière schématique, projetées à plat, avant conformation de l'enveloppe, et non sous la forme toroïdale qui est adoptée une fois l'enveloppe conformée. Cette nappe radiale 20 est renforcée de manière continue par des fils radiaux 25, disposés à intervalle régulier et sensiblement parallèlement les uns aux autres. Pour la clarté des figures, il va de soi que ces fils 25 n'ont été représentés que partiellement.

A titre d'exemple, ces fils radiaux sont des retors en polyester, notamment en polyéthylène téréphtalate (PET).

La direction de ces fils radiaux 25 est sensiblement radiale, soit sensiblement parallèle à la direction de l'axe strictement radial (xx'), c'est-à-dire que leur direction fait un angle de 0 ± 10° avec l'axe (xx') qui est lui-même perpendiculaire à l'axe circonférentiel (yy') (axe tangent à la direction circonférentielle). L'axe (yy') représenté ici est l'axe circonférentiel médian, contenu dans le plan circonférentiel médian M-M représenté à la figure 1, passant par le milieu de l'armature de sommet 13 du pneumatique 10, soit à mi-distance des deux extrémités 13a et 13b de ladite armature.

Lors de la confection du pneumatique de l'invention sur un tambour, avant l'étape de conformation de l'enveloppe, la nappe 20 consiste normalement en un élément annulaire continu dans une direction perpendiculaire à l'axe des fils radiaux, c'est-à-dire sensiblement parallèle à la direction (yy'), cet élément continu étant formé par recouvrement et assemblage des deux bords (22, 23) du même lé de tissu 24. On pratique dans chaque bord (22, 23) une découpe (26, 27) et une seule, de profondeur donnée, s'étendant de chaque lisière respective (28, 29) vers l'intérieur du tissu, dans une direction sensiblement perpendiculaire à l'axe des fils radiaux 25, cette découpe sectionnant une pluralité de ces fils radiaux. Le tout est représenté à la figure 2a juste avant le recouvrement du bord de tissu 22 par le bord de tissu 23, pour formation de la nappe 20 continue et de sa soudure par recouvrement 21 limitée par ses deux lisières 28 et 29. Sur la figure 2b, la lisière 28 et la découpe 26, recouvertes par le bord de tissu 23, ont été représentées en traits discontinus.

De manière générale, lors de la confection du pneumatique de l'invention, chaque découpe est orientée dans une direction sensiblement circonférentielle, c'est-à-dire une direction faisant un angle de 0 ± 10° avec la direction strictement circonférentielle (yy'). Mais l'invention peut être mise en oeuvre avec des angles supérieurs, par exemple de 20 à 30 °, voire plus.

De préférence, les découpes consistent en de simples incisions, c'est-à-dire en des coupures fines sans enlèvement de tissu, mais l'invention s'applique également aux cas où l'on utilise des découpes plus larges avec enlèvement de tissu (technique dite de "notching"), telles que des encoches ou des échancrures de différentes formes.

Dans la zone de recouvrement, la densité de fils radiaux est doublée par rapport au reste de la nappe soudée. La densité des fils radiaux, à l'extérieur de la soudure, est de manière connue généralement comprise entre quelques dizaines et quelques centaines de fils par dm (décimètre), par exemple entre 50 et 250 fils/dm, ce qui correspond à un intervalle entre deux fils radiaux (distance d'axe en axe) compris entre quelques dixièmes de mm (millimètre) et quelques mm, par exemple entre 0,4 et 2,0 mm. A titre d'exemple, la densité de fils radiaux, dans le cas illustré par la figure 2, est d'environ 100 fils/dm de nappe à l'extérieur de la soudure, et donc d'environ 200 fils/dm de nappe à l'intérieur de la soudure.

Dans la présente description, doit être entendu par "soudure par recouvrement" toute la zone de recouvrement ou chevauchement de deux éléments adjacents de tissu formant la nappe radiale (par exemple les deux bords de tissu 22 et 23 sur la fig. 2a), cette zone de recouvrement étant limitée circonférentiellement par ses deux lisières (par exemple 28 et 29 sur la fig. 2b).

Par convention, la dimension de la soudure dans la direction circonférentielle (yy'), c'est-à-dire la distance séparant les deux lisières, est appelée largeur de soudure, et la longueur de chaque découpe, dans cette même direction circonférentielle (yy'), est appelée profondeur de découpe. Quelles que soient la forme ou l'orientation particulière de la découpe, notamment dans le cas où l'axe de cette découpe est incliné par rapport à l'axe circonférentiel (yy'), on entend donc, par profondeur de découpe, non pas la longueur de la découpe elle-même, mais la longueur de sa projection sur l'axe circonférentiel (yy').

Les deux découpes 26 et 27 ont de préférence une profondeur supérieure à la demi-largeur de la soudure, comme illustré clairement sur la figure 2b, puisque chaque découpe, partant de chaque lisière respective vers l'intérieur de la soudure, s'étend au delà de l'axe médian (zz') de la soudure.

La largeur de la soudure par recouvrement peut varier de quelques millimètres à quelques dizaines de millimètres en fonction des caractéristiques particulières du pneumatique fabriqué. Lorsque le pneumatique de l'invention est un pneumatique pour véhicule de tourisme ou pour camionnette, cette largeur est préférentiellement comprise entre 2 et 10 mm.

Lorsque la soudure par recouvrement ne comporte que deux découpes sous le sommet, une dans chacun des deux bords de recouvrement, on préfère que ces deux découpes soient décalées l'une par rapport à l'autre, c'est-à-dire non superposées, par exemple qu'elles soient positionnées de manière sensiblement symétrique de part et d'autre du plan circonférentiel médian, comme illustré par exemple sur la figure 2b.

Selon un autre mode de réalisation de l'invention, la soudure par recouvrement de la nappe radiale peut comporter, sous l'armature de sommet, une pluralité de découpes dans chacun des deux bords de recouvrement, comme illustré par exemple sur la figure 3.

Cette figure 3 schématise un autre exemple de pneumatique 10 conforme à l'invention. Elle représente, vue de dessous et projetée à plat, une portion de nappe carcasse radiale 30 ayant une soudure par recouvrement 31 (fig. 3b), ainsi que les deux bords 32 et 33 d'un même lé de tissu caoutchouté 34 (fig. 3a), ces deux bords étant destinés à être superposés pour former la soudure 31. Lors de la confection du pneumatique de l'invention, on pratique dans chaque bord de soudure (32, 33) une pluralité de découpes (36, 37), de profondeur donnée, s'étendant de chaque lisière respective (38, 39) vers l'intérieur de la soudure dans une direction sensiblement circonférentielle, et sectionnant une pluralité de fils radiaux 25. Le tout est représenté à la figure 3a juste avant le recouvrement du bord de tissu 32 par le bord de tissu 33, pour formation de la nappe continue 30 et de sa soudure par recouvrement 31 limitée par ses deux lisières 38 et 39. Sur la figure 3b, la lisière 38 et les découpes 36, recouvertes au moins en partie par le bord de tissu 33, ont été représentées par des traits discontinus.

Les découpes 36 et les découpes 37 sont ici des découpes entières, dont la profondeur est supérieure à la largeur de soudure ; chacune d'entre elles traverse entièrement la soudure 31, d'une lisière donnée jusqu'au-delà de la lisière opposée.

Comme représenté sur la figure 3, dans les cas où la soudure par recouvrement de la nappe radiale comporte, sous l'armature de sommet, une pluralité de découpes dans chacun des deux bords de recouvrement, ces découpes sont de préférence réparties en nombre sensiblement égal sur les deux bords de recouvrement et de manière uniforme, tout en étant décalées les unes par rapport aux autres, d'un bord à l'autre, de manière à ce qu'il n'y ait pas de découpes opposées (c'est-à-dire situées sur deux bords ou lisières opposés) qui soient superposées.

Comme on le sait, dans un pneumatique radial classique selon l'art antérieur, chaque fil radial 25 forme normalement un arceau de renforcement continu s'étendant, selon une méridienne, sur toute la largeur du pneumatique, enroulé dans chaque bourrelet 16, sous chacune des deux tringles 15, jusqu'aux deux extrémités latérales 14a et 14b de l'armature de carcasse 14 (fig. 1). Lorsqu'au moins une découpe entière est présente dans chaque bord de soudure par recouvrement, sous le sommet du pneumatique, comme illustré par exemple sur la figure 3b, la continuité des arceaux de renforcement est alors interrompue sur toute la largeur de la soudure, et même au-delà, dans chacun des deux bords de recouvrement.

De manière générale, dans la présente description, les valeurs indiquées des profondeurs des découpes, largeurs de soudure, distances minimales entre deux découpes, ou encore des densités de fils, sont les valeurs mesurées dans un plan, lorsque la nappe radiale et sa soudure par recouvrement sont représentées posées à plat.

Bien entendu, pour toutes les figures précédentes, les proportions réelles entre les dimensions des découpes, celles des soudures, les dimensions du pneumatique ou de sa nappe radiale, celles des fils radiaux ou des intervalles entre ces fils, et plus généralement de tout autre paramètre, n'ont pu être respectées, dans un souci de simplification et de clarté de l'exposé.

En outre, la représentation schématique des découpes, sous la forme de simples traits sur les figures précédentes, ne saurait illustrer la forme réelle de ces découpes dans le pneumatique vulcanisé, c'est-à-dire après les étapes de conformation et de cuisson. En effet, ces découpes peuvent se déformer plus ou moins lors de la fabrication du pneumatique : selon leur nombre et leur profondeur notamment, on a observé que certaines d'entre elles peuvent s'ouvrir de plusieurs millimètres, essentiellement dans la direction des fils radiaux.

La distance moyenne entre deux découpes, mesurée selon l'axe principal (zz') de la soudure, est de préférence supérieure à 10 mm, plus préférentiellement supérieure à 15 mm, que ces deux découpes soient opposées ou adjacentes (c'est-à-dire situées sur deux bords opposés, ou sur un même bord, respectivement).

Préférentiellement, dans les pneus de l'invention, les découpes partent de la lisière pour se propager vers l'intérieur de la soudure, comme illustré précédemment sur les figures 2 et 3. Mais l'invention s'applique aussi aux cas où des découpes sont internes à la soudure, c'est-à-dire ne s'étendent pas jusqu'à l'une et/ou l'autre des deux lisières, restant localisées à l'intérieur-même de la zone de recouvrement.

Les différentes découpes pratiquées en chacun des deux bords de recouvrement de la soudure peuvent avoir la même longueur, ou des longueurs différentes. De préférence, ces découpes sont identiques pour chacun des deux bords. Ainsi, l'opération de découpe sur les lés de tissus, lors de la confection du pneumatique, est la même pour chaque bord ou lisière de soudure, et peut donc être assurée par le même outil, à une cadence élevée.

Comme cela a déjà été mentionné, on préfère que les soudures ne contiennent pas de découpes superposées. C'est particulièrement le cas lorsqu'on utilise, pour la fabrication du pneumatique, un tambour de confection dépourvu de membrane : la nappe intérieure (gomme d'étanchéité) faisant alors office de membrane, cette nappe risquerait de glisser à travers deux découpes superposées et trop largement ouvertes lors de l'étape de conformation de l'enveloppe, et ainsi de passer à travers la nappe radiale qui recouvre directement cette nappe intérieure.

Un tel risque existe également avec un tel tambour de confection, dans le cas de découpes non superposées, lorsqu'on utilise des découpes peu nombreuses et de grande profondeur, par exemple une incision entière à chacun des deux bords de recouvrement et s'étendant bien au-delà des lisières de la soudure : il est alors préférable, pour diminuer l'ouverture des découpes lors de la fabrication du pneumatique, de réduire la longueur et/ou d'augmenter le nombre de ces découpes.

Ainsi, de manière générale, conformément à l'invention, le nombre et la profondeur des découpes, sous l'armature de sommet du pneumatique, peuvent varier dans une large mesure, en fonction notamment de l'importance du défaut à corriger, de la structure particulière du pneumatique fabriqué et des moyens de fabrication utilisés.

De préférence, selon l'invention, la soudure par recouvrement de la nappe radiale ne comporte de découpes, en chacun de ses deux bords, que sous l'armature de sommet du pneumatique.

### Exemples de réalisation:

### Essai I:

On réalise deux séries d'enveloppes de pneumatique pour véhicule de tourisme, de dimension 205/70-15, une première série correspondant à l'invention (série A), une seconde à l'état de la technique (série B), chaque série contenant 70 enveloppes différentes. Comme représenté par exemple sur la figure 1, les pneus de chaque série comportent deux flancs 11 réunis par une bande de roulement 12, une armature de sommet 13 s'étendant d'un bord 13a à l'autre bord 13b, une armature de carcasse 14 ancrée à deux tringles 15 dans chaque bourrelet 16 jusqu'aux deux extrémités latérales 14a et 14b de cette armature 14.

L'armature de sommet 13 comporte, de manière classique, deux nappes superposées, renforcées par des câbles métalliques sensiblement parallèles et inclinés d'environ 22 degrés par rapport au plan circonférentiel médian, ces nappes étant croisées par rapport à ce même plan.

L'armature de carcasse 14 est constituée d'une seule nappe radiale renforcée de fils radiaux en PET (PET standard dit "regular"). Ces fils radiaux sont des retors de formule 110x3 (tex) 275Z/275S, c'est-à-dire que chacun de ces retors est constitué par trois filés (fibres multifilamentaires), dont le titre est égal à 110 tex avant torsion, qui sont tordus individuellement à 275 tours par mètre dans la direction Z au cours d'une première étape, puis tordus les trois ensemble en sens inverse (direction S) à 275 tours par mètre au cours d'une seconde étape. La densité de fils radiaux, en dehors de la soudure, est de 111 fils par dm de nappe radiale, la distance entre deux fils radiaux adjacents, d'axe en axe, étant donc d'environ 0,9 millimètre. Cette nappe radiale comporte une soudure par recouvrement dont l'axe (zz') est sensiblement parallèle à celui des fils radiaux. Cette soudure a une largeur d'environ 6 mm, elle contient donc 6 à 7 fils radiaux dans chaque bord de recouvrement, et sa longueur totale, selon l'axe (zz'), d'une extrémité 14a à l'autre extrémité 14b de la nappe radiale 14, est d'environ 550 mm.

Lors de la confection des pneus de la série A, a été pratiquée sous l'armature de sommet, sur chacune des deux lisières de la soudure par recouvrement, une seule incision dont la profondeur (environ 3,5 mm) est telle que 4 fils radiaux sont coupés dans chaque bord de recouvrement. Au total, 8 fils radiaux sont donc sectionnés sous l'armature de sommet des pneus de la série A. Les deux incisions, partant de chaque lisière dans une direction sensiblement perpendiculaire aux fils radiaux, sont situées de part et d'autre et à une distance sensiblement égale du plan circonférentiel médian M-M. La distance moyenne entre les deux découpes, mesurée dans l'axe (zz') de la soudure, est de 25 mm.

La présence de ces deux découpes est la seule caractéristique qui distingue les pneus de la série A de ceux de la série B. En particulier, la soudure par recouvrement de leur nappe radiale ne comporte aucune découpe en dehors de la zone située sous l'armature de sommet.

Chaque enveloppe est montée sur une jante et gonflée à 3,5 bars, puis on analyse la déformation en creux due à la soudure par recouvrement, en mesurant la profondeur moyenne dudit creux au moyen d'un dispositif optique connu, comportant essentiellement un faisceau laser, un capteur optique et des moyens d'enregistrement. On enregistre la déformation en un grand nombre de points (plusieurs centaines), sur chaque flanc de l'enveloppe, puis on calcule la profondeur moyenne pour chaque enveloppe testée.

On compte ensuite le nombre d'enveloppes pour lesquelles cette profondeur moyenne est inférieure à 0,500 mm, seuil en dessous duquel on considère que le pneumatique présente une bonne apparence, uniformité de ses flancs. On calcule également une valeur moyenne de la dépression pour chaque série d'enveloppes.

On constate alors que près de 99 % des pneus de la série A (69 sur les 70 testés) répondent positivement au test, avec une profondeur moyenne inférieure à 0,500 mm, contre 17 % seulement des pneus de la série B.

D'autre part, pour l'ensemble des pneus de la série A, la valeur moyenne de la dépression est de 0,238 mm, alors qu'elle est de 0,555 mm, soit nettement plus du double, pour l'ensemble des pneus de la série B.

### Essai II:

On réalise une nouvelle série de 20 enveloppes de pneumatiques (série C), toutes conformes à l'invention. Ces enveloppes ont la même construction que les enveloppes de la série A aux deux modifications près qui suivent:
- la soudure a une largeur d'environ 4 mm, elle contient donc 4 à 5 fils radiaux dans chaque bord de recouvrement;
- la profondeur de chaque incision (environ 8 mm) est telle que 9 fils radiaux sont coupés, à partir de chaque lisière ; chacune des deux incisions s'étend donc bien au-delà des limites de la soudure, et, au total, 18 fils radiaux sont ainsi sectionnés sous l'armature de sommet.

On contrôle les enveloppes de la série C de la même façon que précédemment. On constate alors que toutes les enveloppes testées répondent positivement au test, i.e. qu'elles présentent toutes une déformation dont la profondeur moyenne est inférieure à 0,500 mm. Pour l'ensemble des pneumatiques de la série C, la valeur moyenne de la dépression est de 0,240 mm, avec des profondeurs moyennes par enveloppe variant de 0,100 à 0,430 mm.

### Essai III:

On réalise dans cet essai cinq nouvelles séries (séries D, E, F, G et H) contenant chacune 20 enveloppes de pneumatique ; les séries F, G et H sont conformes à l'invention, les séries D et E non conformes à l'invention.

Pour cet essai, on procède comme précédemment indiqué pour les essais I et II, aux modifications près qui suivent:
- les enveloppes sont de dimension 165/80-13;
- les fils radiaux sont des retors en PET dit "HMLS" (PET à haut module et faible contraction thermique), de formule 144x2 (tex) 290Z/290S;
- la densité de fils radiaux, en dehors de la soudure, est de 116 fils par dm de nappe radiale;
- la précision de la fabrication (emploi d'une machine automatique de confection) est telle que la soudure par recouvrement de la nappe radiale a une largeur égale à 6 ± 2 mm;
- la pression de gonflage des enveloppes est égale à 4 bars.

Ces cinq séries d'enveloppes se différencient par les caractéristiques qui suivent:
- série D (non conforme à l'invention): enveloppes standard, sans découpe;
- série F (conforme à l'invention): 1 découpe unique de profondeur 2 mm à chacun des deux bords de recouvrement;
- série G (conforme à l'invention): 1 découpe unique de profondeur 5 mm à chacun des deux bords de recouvrement;
- série H (conforme à l'invention): 1 découpe unique de profondeur 10 mm à chacun des deux bords de recouvrement;
- série E (non conforme à l'invention): 1 découpe unique de profondeur 10 mm sur un seul (bord radialement extérieur) des deux bords de recouvrement.

Pour les séries conformes à l'invention (F, G et H), les deux découpes ont été pratiquées de part et d'autre et à égale distance (28 mm environ) du plan circonférentiel médian M-M, cette distance étant mesurée selon l'axe médian (zz') de la soudure. Pour la série E non conforme à l'invention, la découpe unique, sur le bord radialement extérieur de la soudure par recouvrement, a été sensiblement centrée sous l'armature de sommet, dans le plan circonférentiel médian M-M. D'autre part, quelle que soit la série analysée (E, F, G ou H), la soudure par recouvrement ne comporte aucune découpe autre que celle(s) située(s) sous l'armature de sommet des enveloppes.

On analyse la déformation en creux comme précédemment, en mesurant la déformation moyenne pour chaque enveloppe, puis en calculant une profondeur moyenne de la dépression pour chaque série d'enveloppes.

Les résultats suivants ont été obtenus (base 100 pour la profondeur moyenne calculée sur la série D témoin, avec une précision d'environ 5 %):
série D: 100 ;
série F : 81 ;
série G : 78 ;
série H : 65 ;
série E : 95 .

Dans cet essai, il doit être noté que les enveloppes témoins de la série D (nappe radiale renforcée avec un PET "HMLS") présentaient une faible déformation en creux de leur flanc, la profondeur moyenne calculée étant inférieure à 0,350 mm.

Malgré cela, on constate que sur les enveloppes conformes à l'invention la déformation en creux du flanc est réduite d'environ 20 % à 35 % par rapport au témoin, donc de manière tout à fait significative, et cela même lorsque les découpes utilisées ont une profondeur limitée de 2 mm (série F).

Les meilleurs résultats sont obtenus avec les découpes entières (série H) dont la profondeur (10 mm) est supérieure à la largeur maximale de la soudure par recouvrement (8 mm). On note par ailleurs que l'emploi d'une découpe sur un seul des deux bords de recouvrement (série E non conforme à l'invention), malgré une profondeur de découpe importante de 10 mm, comme pour la série H, ne conduit pas à une amélioration significative.

En conséquence, grâce à l'invention, les déformations en creux sont nettement moins prononcées dans les flancs des pneumatiques radiaux, et les traces des soudures par recouvrement nettement moins visibles.

Ainsi, de manière inattendue, on a corrigé un défaut présent dans les flancs du pneumatique en intervenant sous le sommet de ce pneumatique, à l'abri de son armature de sommet et donc sans risque de dégradation des autres propriétés du pneumatique.

On notera ici que les solutions de l'art antérieur précédemment décrites préconisaient, pour réduire la déformation en creux du flanc, d'agir sur la tension des fils radiaux en découpant les fils radiaux dans un seul bord de soudure par recouvrement, afin de ne faire participer ainsi que les fils de l'autre bord à la mise sous tension de la nappe carcasse.

Les découpes selon l'invention, sur chacun des deux bords de la soudure par recouvrement, ont une fonction différente. Ces découpes, en s'ouvrant plus ou moins lors de la fabrication de l'enveloppe, essentiellement dans la direction des fils radiaux, vont permettre à la soudure de se déformer davantage que le tissu environnant, et rendre ainsi possible un rééquilibrage des longueurs des méridiennes occupées par les fils radiaux, entre l'intérieur de la soudure par recouvrement et le reste de la nappe, jusque dans le flanc du pneumatique gonflé.

Bien entendu, l'invention peut aussi s'appliquer aux cas où les fils radiaux ne sont pas utilisés seuls pour renforcer les nappes radiales, mais associés à d'autres fils non radiaux. Par exemple la nappe radiale peut consister en un tissu tramé comportant, de manière connue, des fils de chaîne et des fils de trame, les fils de chaîne étant les fils radiaux 25 représentés aux figures 2 et 3, croisés avec des fils de trame non représentés sur ces figures, par exemple des fils de trame en polyester et/ou en coton.

Il est connu par ailleurs que les lés de tissu utilisés pour la confection de nappes carcasse radiales sont découpés dans des bandes de tissu plus longues comportant elles-mêmes des soudures dites "de préparation" (sur les tissus), par opposition aux soudures dites "de confection" (sur les nappes du pneumatique).

Pour la fabrication des pneus de l'invention, on choisit de préférence des soudures de préparation comportant elles-mêmes, dans chacun de leurs deux bords de recouvrement, au moins une découpe sectionnant une pluralité de fils radiaux dans la zone centrale du tissu, c'est-à-dire dans la portion de tissu qui sera située sous l'armature de sommet une fois le pneumatique fabriqué. Ainsi, de préférence, lorsque la nappe radiale contient plusieurs soudures par recouvrement, qu'il s'agisse de soudures de préparation ou de soudures de confection, chacune de ces soudures par recouvrement comporte, dans chacun de ses deux bords, au moins une découpe localisée sous l'armature de sommet du pneumatique, sectionnant une pluralité de fils radiaux, une telle découpe étant plus préférentiellement une découpe entière dont la profondeur est supérieure à la largeur de la soudure par recouvrement.

L'homme de l'art reconnaîtra aisément les avantages de l'invention.

Tout d'abord, les caractéristiques des fils radiaux, leur nature, leur agencement sont les mêmes à l'intérieur qu'à l'extérieur de la soudure, ce qui permet de fabriquer le pneu de l'invention en partant de tissus standards, homogènes.

Ensuite, pour la fabrication du pneu de l'invention, une seule modification, mineure et pratiquement sans surcoût, est apportée au procédé et à l'outil de fabrication: une opération de découpe sur les bords des tissus, opération simple et rapide pouvant être réalisée à l'aide de couteaux de forme classique.

Enfin et surtout, la localisation spécifique des découpes, sous l'armature de sommet et donc à l'abri de cette dernière, autorise de pratiquer des découpes très profondes, sectionnant les bords de recouvrement de la soudure et les fils radiaux qu'elle contient au-delà des lisières de cette soudure, sans que la sécurité du pneumatique soit remise en cause. Ce dernier avantage est remarquable par rapport aux solutions de l'art antérieur préconisant une découpe des fils radiaux dans la zone flanc ou la partie interne des bourrelets, de telles solutions exigeant en effet, comme cela a été déjà expliqué, qu'aucun des fils extérieurs à la soudure ne soit coupé, et donc qu'une très grande précision soit apportée à la réalisation des découpes et des soudures.

Ainsi, la fabrication des pneumatiques de l'invention ne nécessite aucune intervention manuelle particulière pour contrôler ou ajuster les profondeurs de découpes, le nombre de fils radiaux coupés, ou encore les largeurs des soudures par recouvrement. Elle ne nécessite pas non plus l'emploi de machines plus précises que les machines de fabrication utilisées habituellement pour la fabrication des pneumatiques radiaux classiques. Les pneumatiques de l'invention peuvent être notamment réalisés sur des machines automatiques fonctionnant à cadence élevée, sans perte de productivité.

Bien entendu, l'invention n'est pas limitée aux exemples de réalisation décrits précédemment.

Elle n'est pas limitée à un pneumatique radial présentant une seule nappe carcasse radiale, et elle s'applique aux cas où l'on utilise plus d'une nappe pour constituer l'armature de carcasse.

Elle n'est pas limitée non plus à l'utilisation de nappes radiales renforcées avec des fils présentant de faibles valeurs de modules en extension, comme des fils en polyester par exemple, et notamment des fils en PET. Les fils radiaux pourraient être d'autres fils textiles, comme par exemple des fils textiles à base de polyamide, aromatique ou non aromatique, des fibres à base de cellulose, ou d'autres fils non textiles, par exemple métalliques, ou encore des fils hybrides réalisés avec des matières différentes.

Par ailleurs, le terme "fil" doit être pris dans un sens très général, c'est-à-dire que chacun des fils radiaux peut être constitué par exemple d'un seul fil unitaire, de forme cylindrique ou non, soit, d'un assemblage de plusieurs fils unitaires, formant par exemple un câble, un retors, une fibre multifilamentaire tordue sur elle-même, chaque fil unitaire pouvant être notamment constitué soit d'un filament unique, par exemple un monofilament de diamètre élevé, soit de plusieurs filaments. Cette définition est valable quelles que soient la section droite du fil unitaire, la matière, la technique d'assemblage lorsqu'il s'agit de fils assemblés.

## Revendications

1. Pneumatique radial (10) ayant au moins une armature de sommet (13) et une armature de carcasse (14) constituée d'au moins une nappe (20,30) de tissu caoutchouté (24,34) comprenant des fils radiaux (25), ladite nappe radiale (20,30) comportant au moins une soudure par recouvrement (21,31) formée par le chevauchement de deux bords (22,23;32,33) dudit tissu et limitée circonférentiellement par deux lisières (28,29;38,39), **caractérisé en ce que** ladite soudure (21,31) comporte, en chacun desdits bords, au moins une découpe (26,27;36,37) localisée sous l'armature de sommet (13), sectionnant une pluralité de fils radiaux (25).

2. Pneumatique (10) selon la revendication 1, **caractérisé en ce que** ladite découpe (26,27;36,37) a une profondeur supérieure à la demi-largeur de la soudure par recouvrement (21,31), ces deux dimensions étant mesurées dans la direction circonférentielle (yy').

3. Pneumatique (10) selon la revendication 2, **caractérisé en ce que** ladite découpe (36,37) a une profondeur supérieure à la largeur de la soudure par recouvrement (31).

4. Pneumatique (10) selon l'une quelconque des revendications 1 à 3, **caractérisé en ce qu'**en chaque bord (22,23;32,33) de soudure par recouvrement (21,31), ladite découpe (26,27;36,37) s'étend de la lisière (28,29;38,39) vers l'intérieur de la soudure (21,31).

5. Pneumatique (10) selon l'une quelconque des revendications 1 à 4, **caractérisé en ce qu'**il est un pneumatique pour véhicule de tourisme ou pour camionnette, et **en ce que** ladite découpe (26,27; 36,37) a une profondeur supérieure à 3 millimètres.

6. Pneumatique (10) selon l'une quelconque des revendications 1 à 5, **caractérisé en ce que** la soudure par recouvrement (31) comporte une pluralité de découpes (36,37) sous l'armature de sommet (13), en chacun de ses deux bords (32,33), réparties en nombre sensiblement égal sur ces deux bords.

7. Pneumatique (10) selon l'une quelconque des revendications 1 à 6, **caractérisé en ce que** la soudure par recouvrement (21,31) ne comporte pas de découpes (26,27;36,37) superposées.

8. Pneumatique (10) selon la revendication 7, **caractérisé en ce que** la distance moyenne entre deux découpes (26,27;36,37) mesurée selon l'axe (zz') de la soudure (21,31) est supérieure à 10 millimètres.

9. Pneumatique (10) selon l'une quelconque des revendications 1 à 8, dont la nappe radiale (20,30) contient plusieurs soudures par recouvrement (21,31), **caractérisé en ce que** chaque soudure par recouvrement comporte, en chacun de ses deux bords (22,23;32,33), au moins une découpe (26,27;36,37) localisée sous l'armature de sommet (13), sectionnant une pluralité de fils radiaux (25).

10. Pneumatique (10) selon la revendication 9, **caractérisé en ce que** ladite découpe (36,37) a une profondeur supérieure à la largeur de la soudure par recouvrement (31).

11. Pneumatique (10) selon l'une quelconque des revendications 1 à 10, **caractérisé en ce que** la soudure par recouvrement (21,31) ne comporte de découpes (26,27;36,37), en chacun de ses deux bords (22,23;32,33), que sous l'armature de sommet (13).

12. Pneumatique (10) selon l'une quelconque des revendications 1 à 11, **caractérisé en ce que** l'armature de carcasse (14) comporte une seule nappe radiale (20;30).

13. Pneumatique (10) selon l'une quelconque des revendications 1 à 12, **caractérisé en ce que** les fils radiaux (25) sont à base de polyester.

14. Pneumatique (10) selon la revendication 13, **caractérisé en ce que** le polyester est du polyéthylène téréphtalate.

## Patentansprüche

1. Radialreifen(10), der mindestens eine Scheitelbewehrung (13) und eine Karkassenbewehrung (14) aufweist, die aus mindestens einer Lage (20, 30) aus gummiertem Tuch (24, 34) gebildet ist, das Radialdrähte (25) aufweist, wobei die genannte Radiallage (20, 30) mindestens eine Überdeckungsschweißung (21, 31) aufweist, die durch Überlagerung der beiden Ränder (22, 23; 32,33) des genannten Tuches gebildet und in Umfangsrichtung durch zwei Kanten (28, 29; 38, 39) begrenzt ist, **dadurch gekennzeichnet, daß** die genannte Schweissung (21, 31) in jedem ihrer genannten Ränder mindestens einen Einschnitt (26, 27; 36, 37) aufweist, der unter der Scheitelbewehrung (13) angeordnet ist und eine Mehrzahl von Radialdrähten (25) durchschneidet.

2. Reifen (10) nach Anspruch 1, **dadurch gekennzeichnet, daß** der genannte Einschnitt (26, 27; 36, 37) eine Tiefe aufweist, die größer ist als die halbe Breite der Überdeckungsschweißung (21, 31), wobei diese beiden Abmessungen in Umfangsrichtung (yy') gemessen sind.

3. Reifen (10) nach Anspruch 2, **dadurch gekennzeichnet, daß** der genannte Einschnitt (36, 37) eine Tiefe aufweist, die größer ist als die Breite der Überdeckungsschweißung (31).

4. Reifen (10) nach irgendeinem der Ansprüche 1 bis 3, **dadurch gekennzeichnet, daß** in jedem Rand (22, 23; 32, 33) der Überdeckungsschweißung (21, 31) der genannte Einschnitt (26, 26; 36, 37) sich von der Kante (28, 29; 38, 39) aus zur Innenseite der Schweißung (21, 31) hin erstreckt.

5. Reifen (10) nach irgendeinem der Ansprüche 1 bis 4, **dadurch gekennzeichnet, daß** er ein Reifen für einen PKW oder einen Kleinlastwagen ist, und daß der genannte Einschnitt (26, 27; 36, 37) eine Tiefe von mehr als 3 mm aufweist.

6. Reifen (10) nach irgendeinem der Ansprüche 1 bis 5, **dadurch gekennzeichnet, daß** die Überdeckungsschweißung (31) eine Mehrzahl bzw. Vielzahl von Einschnitten (36, 37) unter der Scheitelbewehrung (13) in jeden seiner beiden Ränder (32, 33) aufweist, die in im wesentlichen gleicher Zahl über diese beiden Ränder verteilt sind.

7. Reifen (10) nach irgendeinem der Ansprüche 1 bis 6, **dadurch gekennzeichnet, daß** die Überdeckungsschweißung (21, 31) keine übereinanderliegenden Einschnitte (26, 27; 36, 37) aufweist.

8. Reifen (10) nach Anspruch 7, **dadurch gekennzeichnet, daß** der mittlere Abstand zwischen zwei Einschnitten (26, 27; 36, 37), längs der Achse (zz') der Schweißung (21, 31) gemessen, größer ist als 10 Millimeter.

9. Reifen (10) nach irgendeinem der Ansprüche 1 bis 8, deren Radiallage (20, 30) mehrere Überdeckungsschweißungen (21, 31) enthält, **dadurch gekennzeichnet, daß** jede Überdeckungsschweißung in jedem ihrer beiden Ränder (22, 23; 32, 33) mindestens einen Einschnitt (26, 27; 36, 37) aufweist, der unter der Scheitelbewehrung (13) angeordnet ist und eine Vielzahl von Radialdrähten (25) schneidet.

10. Reifen (10) nach Anspruch 9, **dadurch gekennzeichnet, daß** der genannte Einschnitt (36, 37) eine Tiefe aufweist, die größer ist als die Breite der Überdeckungsschweißung (31).

11. Reifen (10) nach irgendeinem der Ansprüche 1 bis 10, **dadurch gekennzeichnet, daß** die Überdeckungsschweißung (21, 31) nur Einschnitte (26, 27; 36, 37) in jedem ihrer Ränder (22, 23; 32, 33) unter der Scheitelbewehrung (13) aufweist.

12. Reifen (10) nach irgendeinem der Ansprüche 1 bis 11, **dadurch gekennzeichnet, daß** die Scheitelbewehrung (14) eine einzige Radiallage (20; 30) aufweist.

13. Reifen (10) nach irgendeinem der Ansprüche 1 bis 12, **dadurch gekennzeichnet, daß** die Radialdrähte (25) auf Polyesterbasis beruhen.

14. Reifen (10) nach Anspruch 13, **dadurch gekennzeichnet, daß** der Polyester Polyethylenterephthalat ist.

## Claims

1. Radial tyre (10) having at least one belt reinforcement (13) and one carcass reinforcement (14) consisting of at least one ply (20, 30) of rubberised fabric (24, 34) and comprising radial threads (25), the said radial ply (20, 30) having at least one overlapping splice (21, 31) formed by the overlapping of two edges (22, 23; 32, 33) of the said fabric and limited circumferentially by two borders (28, 29; 38, 39), **characterised in that** the said splice (21, 31) comprises, in each of the said edges, at least one cut (26, 27; 36, 37) located underneath the belt reinforcement (13), which splits a plurality of radial threads (25).

2. Tyre (10) according to Claim 1, **characterised in that** the said cut (26, 27; 36, 37) has a depth greater than half the width of the overlapping splice (21, 31), these two dimensions being measured in the circumferential direction (yy').

3. Tyre (10) according to Claim 2, **characterised in that** the said cut (36, 37) has a depth larger than the width of the overlapping splice (31).

4. Tyre (10) according to any of Claims 1 to 3, **characterised in that** in each edge (22, 23; 32, 33) of the overlapping splice (21, 31), the said cut (26, 27; 36, 37) extends from the border (28, 29; 38, 39) inwards into the splice (21, 31).

5. Tyre (10) according to any of Claims 1 to 4, **characterised in that** it is a tyre for a passenger car or a van, and **in that** the said cut (26, 27; 36, 37) has a depth in excess of 3 mm.

6. Tyre (10) according to any of Claims 1 to 5, **characterised in that** the overlapping splice (31) comprises a plurality of cuts (36, 37) underneath the belt reinforcement (13) and in each of its two edges (32, 33), distributed in essentially equal numbers in each of the two edges.

7. Tyre (10) according to any of Claims 1 to 6, **characterised in that** the overlapping splice (21, 31) has no cuts (26, 27; 36, 37) that are superposed.

8. Tyre (10) according to Claim 7, **characterised in that** the mean distance between two cuts (26, 27; 36, 37), measured along the axis (zz') of the seam (21, 31), is greater than 10 mm.

9. Tyre (10) according to any of Claims 1 to 8, whose radial ply (20, 30) contains several overlapping splices (21, 31), **characterised in that** each overlapping splice comprises, in each of its two edges (22, 23; 32, 33), at least one cut (26, 27; 36, 37) located underneath the belt reinforcement (13) and splitting a plurality of radial threads (25).

10. Tyre (10) according to Claim 9, **characterised in that** the said cut (36, 37) has a depth greater than the width of the overlapping splice (31).

11. Tyre (10) according to any of Claims 1 to 10, **characterised in that** the overlapping splice (21, 31) has no cuts (26, 27; 36, 37) in either of its two edges (22, 23; 32, 33), except underneath the belt reinforcement (13).

12. Tyre (10) according to any of Claims 1 to 11, **characterised in that** the carcass reinforcement (14) comprises a single radial ply (20, 30).

13. Tyre (10) according to any of Claims 1 to 12, **characterised in that** the radial threads (25) are polyester-based.

14. Tyre (10) according to Claim 13, **characterised in that** the polyester is polyethylene terephthalate.
